# EUROPÄISCHE PATENTSCHRIFT

(11) **EP 1 797 349 B1**
(45) Veröffentlichungstag und Bekanntmachung des Hinweises auf die Patenterteilung: **26.11.2008**
(21) Anmeldenummer: 05777580.1
(22) Anmeldetag: 03.09.2005
(51) Int. Cl.: F16H 7/08

(54) **HYDRAULISCHER SPANNER**
HYDRAULIC TENSIONER
TENDEUR HYDRAULIQUE

(30) Priorität: 05.10.2004 DE 102004048281
(43) Veröffentlichungstag der Anmeldung: 20.06.2007
(73) Patentinhaber: Schaeffler KG, 91074 Herzogenaurach (DE)
(72) Erfinder: KROON, Bert, 91052 Erlangen (DE); KOCH, Reinhard, 96163 Wachenroth (DE)
(86) Internationale Anmeldenummer: PCT/EP2005/009506
(87) Internationale Veröffentlichungsnummer: WO 2006/037410

(56) Entgegenhaltungen:
- DE-A1- 3 639 389
- DE-A1- 10 065 059
- JP-A- 11 201 245

## Beschreibung

### Geblet der Erfindung

Die Erfindung betrifft einen hydraulischen Spanner für Zugmittel von Verbrennungsmotoren, insbesondere nach dem Oberbegriff des Patentanspruchs 1.

### Hintergrund der Erfindung

Zugmittel wie Ketten- oder Riementriebe benötigen zum Erreichen eines Maximums an Wirkungsgrad und Lebensdauer eine optimale Vorspannung. Da sich die Länge der Zugmittel durch Erwärmung und Verschleiß ändert, muss deren Vorspannung laufend nachjustiert werden. Dazu eignen sich vor allem hydraulische Spanner.

Ein solcher besitzt einen Spannerkolben, der z. B. in einem Sackloch eines Gehäuses mit Dichtspiel geführt ist und einen Druckraum abschließt. In diesem befindet sich eine Druckfeder, durch die der Spannerkolben in Druckkontakt mit einer zugmittelführenden Komponente gebracht wird. Über ein Ventil des Gehäuses gelangt beim Nachstellen des Spannerkolbens zusätzlich Öl in den Druckraum. Dadurch und durch die Rückstellfeder wird der Spannerkolben abgestützt und kann sich in Richtung Zugmittel bewegen.

Durchläuft ein Zugmitteltrieb eine Resonanzdrehzahl, kommt es zu erhöhten Belastungen des Zugmittels. Das wiederum führt zu Drucküberhöhungen im Druckraum, die unter Umständen eine Überlastung des Zugmittels zur Folge haben. Zu Vermeidung dieser Überlastung ist ein Druckbegrenzungsventil erforderlich.

Ein bekannter hydraulischer Spanner für Zugmittel von Verbrennungsmotoren weist einen Spannerkolben auf, in dessen Kolbenboden eine, mit einer Öffnung versehene, axiale Mittenbohrung für ein nach außen öffnendes Druckbegrenzungsventil vorgesehen ist, das von einer topfförmigen Kappe gesichert ist, die sich auf dem Kolbenboden abstützt und in Reibschluss mit dem selben sowie in Druckkontakt mit einem Spannmittel steht.

Aus der JP 11 201 245 A ist ein hydraulischer Spanner gemäß der vorangegangenen Beschreibung bekannt. Ergänzend dazu zeigt dieser bekannte Stand der Technik einen Kolbenboden, der ein reduziertes Ende aufweist, an denen die topfartig gestaltete, spanend gefertigte Kappe befestigt ist.

Nachteilig erfordern diese bekannten hydraulischen Spanner einen erhöhten Herstellungs- und Bearbeitungsaufwand für die spanabhebend gefertigte, topfförmige Kappe, die mit einem Presssitz an dem Kolbenboden befestigt sind. Dadurch müssen deren Außendurchmesser sowie der Innendurchmesser der zugehörigen Bohrung des Kolbenbodens passungsbedingt geschliffen werden. Außerdem ist die Abflussöffnung wegen ihrer Bearbeitungsrichtung nur aufwändig herstellbar.

### Aufgabe der Erfindung

Der Erfindung liegt deshalb die Aufgabe zugrunde, einen hydraulischen Spanner mit einem Spannerkolben zu schaffen, der sich durch kostengünstige Fertigung und einfache Handhabung auszeichnet.

### Zusammenfassung der Erfindung

Die Aufgabe wird erfindungsgemäß durch die Merkmale des unabhängigen Patentanspruchs 1 gelöst.

Zur Lösung der Problemstellung ist gemäß der Erfindung die topfartig Kappe als dünnwandige Hülse ausgebildet die einen Hülsenboden einschließt, indem eine Entlüftungsöffnung axial angeordnet ist. Das reduziert ausgebildete Ende des Kolbenbodens schließt eine radiale Nut ein, in die im Einbauzustand ein durchmesserreduzierter Abschnitt der Hülse verrastet, wodurch eine formschlüssige Axialsicherung der Hülse erreicht wird. Ein eventuelles Axialspiel der Hülse ist unkritisch, da diese im Betrieb durch das Spannmittel in Druckkontakt mit der Stirnfläche des Kolbenbodens gebracht wird. Weiterhin ist die Entlüftungsöffnung in dem Hülsenboden so platziert, dass in diese mit einem stimseitig angesenkten Bereich der Mittenbohrung zusammenwirkt.

Aufgrund der geringen Wandstärke der erfindungsgemäßen Hülse ist diese leicht verformbar. Um den für die Sicherung des Druckbegrenzungsventils erforderlichen Festsitz zu erreichen, benötigt die Hülse gegenüber dem reduzierten Ende des Kolbenbodens eine relativ große Überdeckung und eine daraus folgende große Verformung. Diese erlaubt relativ grob tolerierte Maße der betreffenden Flächen und einen Verzicht auf deren Schleifen. Dadurch wird der Fertigungsaufwand gegenüber dem Stand der Technik deutlich gesenkt.

Da die Hülse auf dem Außenumfang des reduzierten Endes des Kolbenbodens angebracht ist, kann sie z. B. mit einfachen Mitteln beim Abstimmen des Druckentlastungsventils abgezogen und wieder aufgeschoben werden.

Da die Öffnung, die dem Abfließen des von dem Druckentlastungsventil abgesteuerten Öls aus der axialen Mittenbohrung dient, im Hülsenboden und axial angeordnet ist, kann sie auf einfache Weise beim Fertigen der Hülse in den Hülsenboden eingebracht werden. Es bietet erhebliche Fertigungsvorteile, dass die Hülse mit dem Hülsenboden durch spanlose Umformtechnik, vorzugsweise durch Tiefziehen gefertigt ist. Für die Haltbarkeit der Hülse ist es vorteilhaft, wenn diese aus Stahlblech gefertigt ist.

Die für den Festsitz der Hülse auf dem reduzierten Ende des Kolbenbodens erforderliche Überdeckung wird dadurch erreicht, dass die Hülse im Bereich ihres offenen Endes vor dem Einbau zumindest in Teilbereichen ihres Umfangs eine Reduktion ihres Durchmessers aufweist. Dies kann durch Einziehen des gesamten Umfangs oder z. B. durch Einprägen einer polygonen Kontur auf die Hülse oder durch punktuelles Einsenken von deren Umfang verwirklicht werden.

Da die Öffnung in den Hülsenboden eingestanzt wird, kann sie außer der Kreisform beliebige Querschnittsformen aufweisen. Für das Abfließen des von dem Druckbegrenzungsventil abgesteuerten Öls ist es sinnvoll, dass der Hülsenboden zumindest zwei Öffnungen aufweist, die mit dem Randbereich der axialen Mittenbohrung in Strömungsverbindung stehen und die auf deren Achse bezogen um vorzugsweise 90° versetzt angeordnet sind. Auf diese Weise ist beispielsweise beim Kontakt der Hülse mit einer Spannschiene eines Zugmitteltriebs in jeder Verdrehwinkellage des Spannerkolbens eine Öffnung oder bei teilweise abgedeckten Öffnungen ein Querschnitt derselben verfügbar.

Sollten die axialen Entlüftungsöffnungen nicht weit genug voneinander platzierbar sein, so dass beide beim Kontakt mit einer Spannschiene verschlossen bleiben, kann durch Ansenken der axialen Mittenbohrung deren wirksamer Durchmesser zur Anordnung der Öffnungen vergrößert werden. Des weiteren können auf der Außenfläche des Hülsenbodens eingeprägte Rillen vorgesehen sein, durch die das Öl auch unter einer Spannschiene ablaufen kann.

Wenn die Spannschiene eine zentrale Nut aufweist, kann die Öffnung in der Mitte des Hülsenbodens eingebracht werden, ohne Gefahr zu laufen, abgedeckt zu werden. Da der Hülsenboden auf einer Stirnfläche des Kolbenbodens aufliegt und somit unterstützt wird, kann die Wandstärke des Hülsenbodens gleich der geringen Wandstärke der Hülse sein. Dadurch wird die Länge des Spanners minimiert.

Ein Vorteil der spanlosen Formgebung der Hülse liegt auch darin, dass der Hülsenboden, der im Normalfall eben ausgebildet ist, ohne Mehraufwand ballig ausgeführt werden kann, was in speziellen Einbaufällen Vorteile bietet. Da die Wandstärke auch des balligen Hülsenbodens konstant ist, ist es vorteilhaft zu dessen Unterstützung die Stirnfläche des Kolbenbodens ebenfalls ballig auszuführen. Die Bearbeitungsqualität der balligen Stirnfläche ist unkritisch, da diese von dem riefenfrei tiefgezogenen Hülsenboden abgedeckt wird.

Das Aufschieben der Hülse auf das reduzierte Ende des Kolbenbodens wird durch eine innere Anschrägung an deren offenem Ende erleichtert.

### Kurze Beschreibung der Zeichnungen

Weitere Merkmale der Erfindung ergeben sich aus der folgenden Beschreibung und den Zeichnungen, in denen ein Ausführungsbeispiel der Erfindung schematisch dargestellt ist.

Dabei zeigen:
- Figur 1: einen Längsschnitt durch einen hydraulischen Spanner und dessen Spannerkolben mit einer erfindungsgemäßen Hülse;
- Figur 2: eine perspektivische Teilansicht des Spannerkolbens mit der Hülse von Figur 1.

### Ausführliche Beschreibung der Zeichnungen

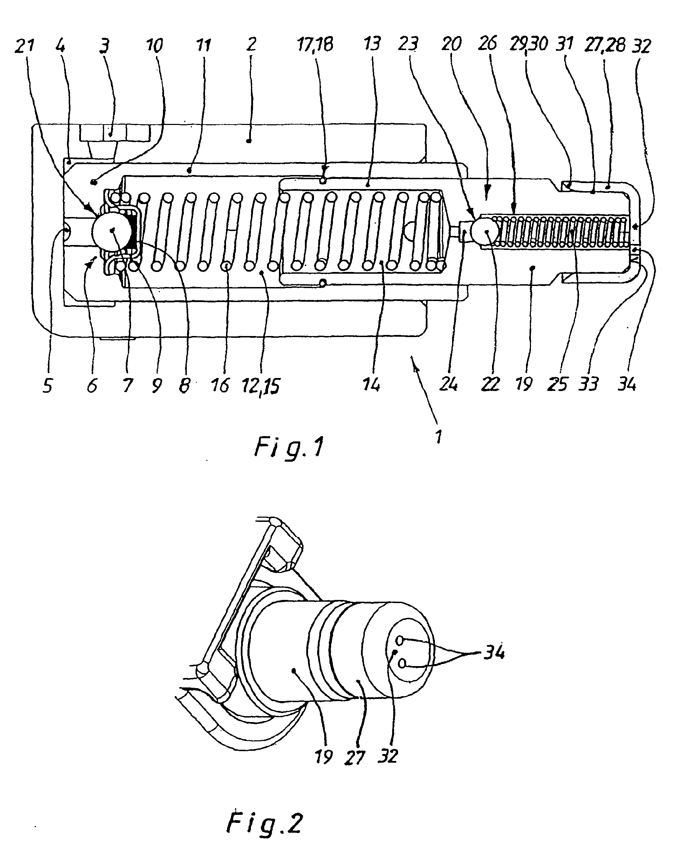

In Figur 1 ist ein Längsschnitt durch einen hydraulischen Spanner 1 mit einem Aufnahmegehäuse 2 dargestellt. Das Aufnahmegehäuse 2 ist fest mit einem nicht dargestellten Motorgehäuse verbunden. Es besitzt einen Druckölanschluss 3, von dem aus das Schmieröl über einen Ringraum 4 und eine Quernut 5 zu einem Ventil 6 gelangt. Dieses befindet sich im Boden 10 einer Büchse 11, die mit Dichtspiel in dem Aufnahmegehäuse 2 angeordnet ist. Das Ventil 6 weist eine Ventilkugel 7 mit einem Ventilsitz 21 und einer Ventilfeder 8 sowie einer Ventilkappe 9 auf.

Die Büchse 11 besitzt ein Sackloch 12 in dem ein Spannerkolben 13 mit Dichtspiel geführt ist. Dieser weist ein Sackloch 14 auf. Die Sacklöcher 12, 14 umschließen einen Hochdruckraum 15, in dem eine Druckfeder 16 angeordnet ist. Diese beaufschlagt über den Spannerkolben 13 ein nicht dargestelltes Spannmittel und ein eben solches Zugmittel. Der Hub des Spannerkolbens 13 ist durch seinen Sprengring 17 in Verbindung mit einer Anschlagschulter 18 der Büchse 11 begrenzt.

Der Spannerkolben 13 besitzt einen Kolbenboden 19, in dem ein Druckbegrenzungsventil 20 angeordnet ist. Dieses weist eine Ventilkugel 22 mit einem Ventilsitz 23 und einer Absteuerbohrung 24 sowie eine Ventilfeder 25 auf. Die Ventilfeder 25 und die Ventilkugel 22, die in einer axialen Mittenbohrung 26 angeordnet sind, werden von einer erfindungsgemäßen Hülse 27 gegen Herausfallen gesichert.

Die Hülse 27 besitzt ein zylindrisches Teil 28, dessen offenes Ende 29 eine innere Abschrägung 30 aufweist, die das Aufschieben der Hülse 27 auf das reduzierte Ende 31 des Kolbenbodens 19 erleichtert. Außerdem ist das offene Ende 29 eingezogen, um einen Presssitz der Hülse 27 auf dem reduzierten Ende 31 zu erzielen. Da die Hülse 27 auf dem Außenumfang des reduzierten Endes 31 angebracht ist, kann sie mit einfachen Mitteln abgezogen und ausgetauscht werden.

Die Hülse 27 besitzt einen flachen Hülsenboden 32, der auf der Stirnfläche 33 des Spannerkolbens 13 satt aufliegt und dadurch deren Unterstützung erfährt.

In dem Hülsenboden 32 ist eine der beiden Öffnungen 34 dargestellt, die im Randbereich der axialen Mittenbohrung 26 angeordnet sind und durch die das abgesteuerte Öl des Druckbegrenzungsventils 20 abfließt.

Die Figur 2 zeigt in perspektivischer Ansicht die auf den Kolbenboden 19 aufgeschobene Hülse 27 mit zwei Öffnungen 34. Diese sind im Querschnittsbereich der axialen Mittenbohrung 26 und bezogen auf die Achse des hydraulischen Spanners 1 um ca. 90° versetzt angeordnet. Dadurch wird erreicht, dass beim Kontakt des Hülsenbodens 32 mit einem zusätzlichen Spannmittel, wie z. B. einer Spannschiene, immer eine der Öffnungen 34 offen ist. Die Kraft, die eine Spannschiene auf den Hülsenboden 32 ausübt, dient zugleich der axialen Fixierung der Hülse 27.

### Bezugszeichen

- 1: hydraulischer Spanner
- 2: Aufnahmegehäuse
- 3: Druckölanschluss
- 4: Ringraum
- 5: Quernut
- 6: Saugventil
- 7: Ventilkugel
- 8: Ventilfeder
- 9: Ventilkappe
- 10: Boden
- 11: Büchse
- 12: Sackloch
- 13: Spannerkolben
- 14: Sackloch
- 15: Hochdruckraum
- 16: Druckfeder
- 17: Sprengring
- 18: Schulter
- 19: Kolbenboden
- 20: Druckbegrenzungsventil
- 21: Ventilsitz
- 22: Ventilkugel
- 23: Ventilsitz
- 24: Absteuerbohrung
- 25: Druckventilfeder
- 26: axiale Mittenbohrung
- 27: Hülse
- 28: zylindrisches Teil
- 29: offenes Ende
- 30: innere Anschrägung
- 31: reduziertes Ende des Kolbenbodens
- 32: Hülsenboden
- 33: Stirnfläche
- 34: Öffnung

## Patentansprüche

1. Hydraulischer Spanner für Zugmittel, insbesondere für einen Verbrennungsmotor, mit einem Spannerkolben (13), in dessen Kolbenboden (19) ein nach außen öffnendes Druckbegrenzungsventil (20) in einer axialen Mittenbohrung (26) angeordnet ist, wobei eine Öffnung der Mittenbohrung (26) von einer topfartigen Kappe gesichert ist, die sich auf dem Kolbenboden (19) abstützt und gleichzeitig an einem reduzierten Ende (31) des Kolbenbodens (19) befestigt ist **dadurch gekennzeichnet, dass** die topfartige Kappe als dünnwandige Hülse (27) ausgebildet ist und einen Hülsenboden (32) einschließt in dem eine Entlüftungsöffnung (34) axial angeordnet ist und ein reduziertes Ende (31) des Kolbenbodens (19) eine Hadialnut aufweist, in die ein durchmesserreduzierter Abschnitt der Hülse (27) verrastet und die Entlüftungsöffnung (34) mit einem stirnseitig angesenkten Bereich der Mittenbohrung (26) zusammenwirkt.

2. Hydraulischer Spanner nach Anspruch 1, **dadurch gekennzeichnet, dass** die Hülse (27) mit dem Hülsenboden (32) durch spanlose Umformtechnik, vorzugsweise durch Tiefziehen gefertigt ist.

3. Hydraulischer Spanner nach Anspruch 2, **dadurch gekennzeichnet, dass** die Hülse (27) vorzugsweise aus Stahlblech gefertigt ist.

4. Hydraulischer Spanner nach Anspruch 3, **dadurch gekennzeichnet, dass** die Hülse (27) im Bereich ihres offenen Endes (29) vor dem Einbau zumindest in Teilbereichen ihres Umfangs eine Reduktion ihres Durchmessers aufweist.

5. Hydraulischer Spanner nach Anspruch 4, **dadurch gekennzeichnet, dass** die Öffnung (34) neben der Kreisform einen beliebigen Querschnitt aufweisen kann.

6. Hydraulischer Spanner nach Anspruch 5, **dadurch gekennzeichnet, dass** der Hülsenboden (32) zumindest zwei Öffnungen (34) aufweist, die mit dem Randbereich der axialen Mittenbohrung (2) in Strömungsverbindung stehen und die auf deren Achse bezogen um vorzugsweise 90° versetzt angeordnet sind.

7. Hydraulischer Spanner nach Anspruch 6, **dadurch gekennzeichnet, dass** die Außenfläche des Hülsenbodens (32) eingeprägte Sicken aufweist.

8. Hydraulischer Spanner nach Anspruch 7, **dadurch gekennzeichnet, dass** der Hülsenboden (32) auf einer Stirnfläche (33) des Kolbenbodens (19) aufliegt.

9. Hydraulischer Spanner nach Anspruch 8, **dadurch gekennzeichnet, dass** die Stirnfläche (33) des Kolbenbodens (19) und der Hülsenboden (32) vorzugsweise eben ausgebildet sind.

10. Hydraulischer Spanner nach Anspruch 9, **dadurch gekennzeichnet, dass** die Hülse (27) an ihrem offenen Ende (29) eine innere Anschrägung (30) aufweist.

## Claims

1. Hydraulic tensioner for pull means, in particular for an internal combustion engine, with a tensioner piston (13), in the piston head (19) of which an outwardly opening pressure-limiting valve (20) is arranged in an axial mid-bore (26), an orifice of the mid-bore (26) being secured by a pot-like cap which is supported on the piston head (19) and at the same time is fastened to a reduced end (31) of the piston head (19), **characterized in that** the pot-like cap is designed as a thin-walled sleeve (27) and encloses a sleeve bottom (32) in which a venting orifice (34) is arranged axially, and a reduced end (31) of the piston head (19) has a radial groove, into which a reduced-diameter portion of the sleeve (27) latches, and the venting orifice (34) cooperates with a region, countersunk on the end face, of the mid-bore (26).

2. Hydraulic tensioner according to Claim 1, **characterized in that** the sleeve (27), together with the sleeve bottom (32), is manufactured by means of a non-cutting forming technique, preferably by deep-drawing.

3. Hydraulic tensioner according to Claim 2, **characterized in that** the sleeve (27) is manufactured preferably from sheet steel.

4. Hydraulic tensioner according to Claim 3, **characterized in that** the sleeve (27) has in the region of its open end (29), before installation, a reduction in its diameter at least in part-regions of its circumference.

5. Hydraulic tensioner according to Claim 4, **characterized in that** the orifice (34) may, in addition to the circular shape, have any desired cross section.

6. Hydraulic tensioner according to Claim 5, **characterized in that** the sleeve bottom (32) has at least two orifices (34) which are flow-connected to the marginal region of the axial mid-bore (2) and which are arranged offset at preferably 90° with respect to the axis of the latter.

7. Hydraulic tensioner according to Claim 6, **characterized in that** the outer face of the sleeve bottom (32) has embossed beads.

8. Hydraulic tensioner according to Claim 7, **characterized in that** the sleeve bottom (32) lies on an end face (33) of the piston head (19).

9. Hydraulic tensioner according to Claim 8, **characterized in that** the end face (33) of the piston head (19) and the sleeve bottom (32) are preferably of planar design.

10. Hydraulic tensioner according to Claim 9, **characterized in that** the sleeve (27) has an inner bevel (30) at its open end (29).

## Revendications

1. Tendeur hydraulique pour moyens de traction, en particulier pour un moteur à combustion interne, comprenant un piston de tendeur (13), dans le fond de piston (19) duquel est disposée, dans un alésage central axial (26), une soupape de limitation de pression (20) s'ouvrant vers l'extérieur, une ouverture de l'alésage central (26) étant fixée par un capuchon en forme de pot qui s'appuie sur le fond du piston (19) et qui est fixé en même temps à une extrémité réduite (31) du fond de piston (19), **caractérisé en ce que** le capuchon en forme de pot est réalisé sous forme de douille (27) à paroi mince et renferme un fond de douille (32), dans lequel une ouverture de désaérage (34) est disposée axialement, et une extrémité réduite (31) du fond de piston (19) présente une rainure radiale dans laquelle une portion de diamètre réduit de la douille (27) vient s'encliqueter, et l'ouverture de désaérage (34) coopère avec une région de l'alésage central (26) qui est chanfreinée du côté frontal.

2. Tendeur hydraulique selon la revendication 1, **caractérisé en ce que** la douille (27) est fabriquée avec le fond de douille (32) par une technique de formage sans enlèvement de copeaux, de préférence par emboutissage profond.

3. Tendeur hydraulique selon la revendication 2, **caractérisé en ce que** la douille (27) est de préférence fabriquée en tôle d'acier.

4. Tendeur hydraulique selon la revendication 3, **caractérisé en ce que** la douille (27) présente, dans la région de son extrémité ouverte (29), avant le montage, au moins dans des régions partielles de sa circonférence, une réduction de son diamètre.

5. Tendeur hydraulique selon la revendication 4, **caractérisé en ce que** l'ouverture (34) peut présenter une section transversale quelconque au lieu d'une forme circulaire.

6. Tendeur hydraulique selon la revendication 5, **caractérisé en ce que** le fond de douille (32) présente au moins deux ouvertures (34), qui sont en liaison fluidique avec la région de bord de l'alésage central axial (2), et qui sont disposées, par rapport à son axe, de manière décalée d'environ 90°.

7. Tendeur hydraulique selon la revendication 6, **caractérisé en ce que** la surface extérieure du fond de douille (32) présente des moulures imprimées.

8. Tendeur hydraulique selon la revendication 7, **caractérisé en ce que** le fond de douille (32) repose sur une surface frontale (33) du fond de piston (19).

9. Tendeur hydraulique selon la revendication 8, **caractérisé en ce que** la surface frontale (33) du fond de piston (19) et le fond de douille (32) sont de préférence réalisés sous forme plane.

10. Tendeur hydraulique selon la revendication 9, **caractérisé en ce que** la douille (27) présente à son extrémité ouverte (29) un biseautage interne (30).
